# EUROPEAN PATENT APPLICATION

(11) **EP 2 309 374 A2**
(43) Date of publication of application: **13.04.2011**
(21) Application number: 10186619.2
(22) Date of filing: 05.10.2010
(51) Int. Cl.: G06F 3/12

(54) **Image forming apparatus, monitoring system for image forming apparatus, and operation program for image forming apparatus**

(30) Priority: 08.10.2009 US 249747 P
(71) Applicant: Kabushiki Kaisha Toshiba, Tokyo 105-8001 (JP); Toshiba TEC Kabushiki Kaisha, Tokyo 141-8664 (JP)
(72) Inventor: Yamaguchi, Hiroshi, Shinagawa-ku Tokyo 141-8664 (JP); Sato, Toshiyuki, Shinagawa-ku Tokyo 141-8664 (JP)
(74) Representative: Gendron, Vincent Christian

(57) **Abstract**

An image forming apparatus including a controller configured to switch the security level between a first state and a second state. The first state allows printing by an image forming section of only first print data provided with verification information among print data a communication unit received. The second state allows printing by the image forming section of print data the communication unit received irrespective of presence or absence of verification information. When, in the first state, the controller receives a permission signal instructing permission of printing of second print data not provided with verification information, the controller switches the security level from the first state to the second state so as to allow printing of the second print data by the image forming section.

## Description

### CROSS-REFERENCE TO RELATED APPLICATION

THIS APPLICATION IS ALSO BASED UPON AND CLAIMS THE BENEFIT OF PRIORITY FROM US PROVISIONAL APPLICATION 61/249747, FILED ON OCTOBER 8, 2009; THE ENTIRE CONTENTS OF WHICH ARE INCORPORATED HEREIN BY REFERENCE.

### FIELD

Exemplary embodiments described herein relate generally to a technique for controlling the security mode of a printing apparatus.

### BACKGROUND

An image forming apparatus is known, which is equipped with a function that verifies received print data containing verification information that is generated at a specified printer driver on the basis of user information and proceeds to printing only if the verification is successful.

Conventionally, this type of image forming apparatus deletes print data if the apparatus receives print data that is not provided with verification information and the verification fails. Deleting the print data prevents information leakage. However, deleting all print data that is not provided with verification information compromises usability.

### DESCRIPTION OF THE DRAWINGS

FIG. 1 is a cross-sectional view of an image forming apparatus;
FIG. 2 is a conceptual diagram of a monitoring system that monitors security of the image forming apparatus;
FIG. 3 is a flowchart illustrating the actions of a monitoring PC that received an alerting signal;
FIG. 4 is a schematic diagram schematically showing a screen of the monitoring PC;
FIG. 5 is a schematic diagram schematically showing a monitoring screen;
FIG. 6 is a schematic diagram schematically showing a warning screen;
FIG. 7 is a flowchart illustrating the action procedure of the image forming apparatus when printing a print job provided with verification information; and
FIG. 8 is a flowchart showing a method of storing image data in a storage.

### DETAILED DESCRIPTION

Generally, an image forming apparatus according to one embodiment includes: a communication unit; an image forming section configured to form an image on a sheet on the basis of print data the communication unit received; and a controller configured to switch a security level between a first state and a second state. The first state allows printing by the image forming section of only first print data provided with verification information among print data the communication unit received. The second state allows printing by the image forming section of print data the communication unit received irrespective of presence or absence of verification information. The controller switches the security level from the first state to the second state when, in the first state, the controller receives a signal that instructs permission of printing of second print data not provided with verification information, so as to allow printing of the second print data by the image forming section. The controller switches the security level from the second state to the first state after allowing the printing of the second print data.

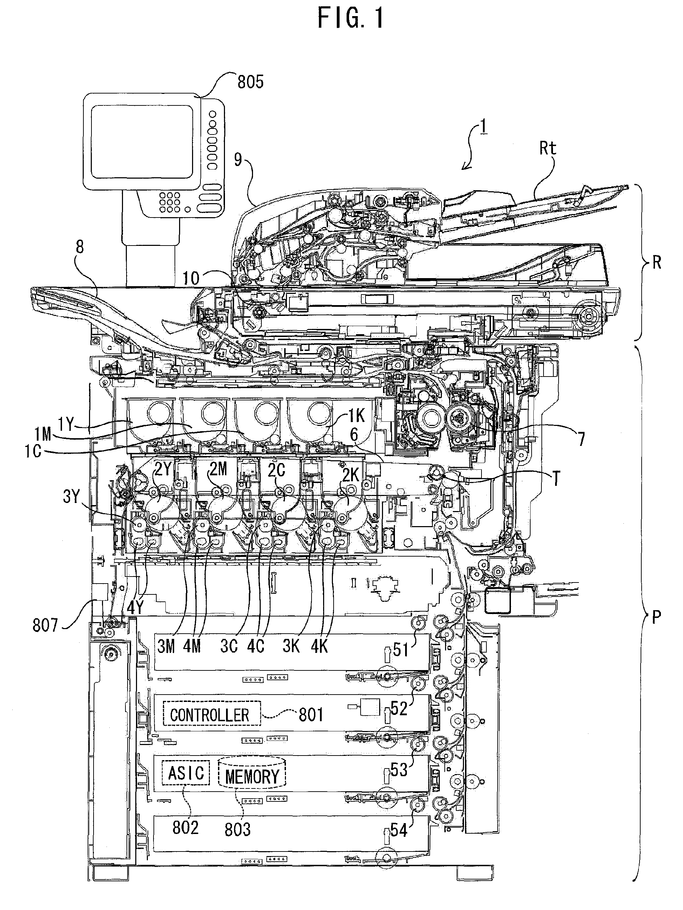

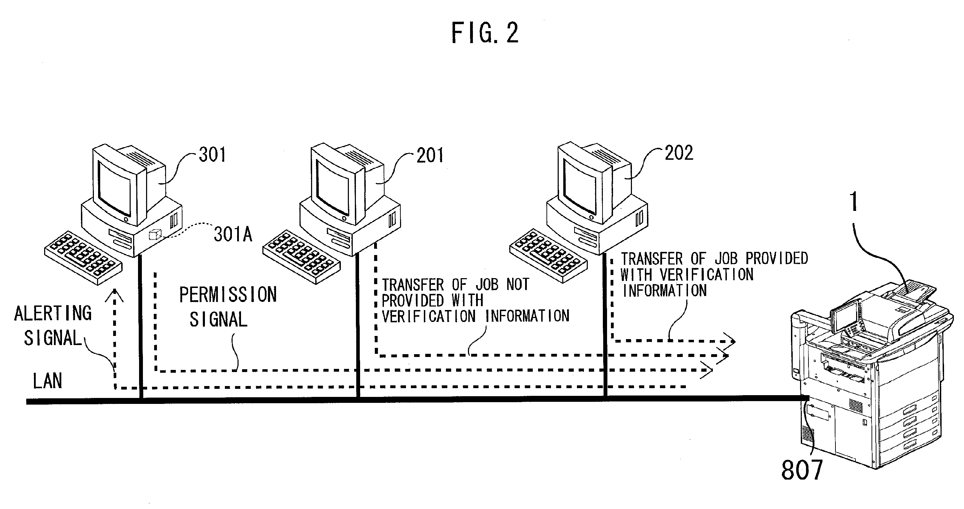

FIG. 1 is a cross-sectional view of the image forming apparatus. FIG. 2 is a conceptual diagram of a monitoring system that monitors security of the image forming apparatus. The image forming apparatus may be an MFP (Multi Function Printer).

Referring to FIG. 1, the image forming apparatus 1 includes an image reading section R and an image forming section P. The image reading section R scans and reads an image of a sheet original and a book original.

The image forming section P forms an image with developer on a sheet on the basis of the image the image reading section R read from the original or on print data an external device transmitted to the image forming apparatus 1.

The image reading section R includes an automatic original transfer device (ADF: Auto Document Feeder) 9 that automatically transfers an original to a predetermined image reading position. The image reading section R reads images of an original that is automatically transferred by the automatic original transfer device 9 and placed on an original tray (predetermined original placement table) Rt, or of an original placed on an original table (not shown), by a scanning optical system 10.

The image forming section P further includes toner cartridges 1Y to 1K, pick-up rollers 51 to 54, photosensitive members 2Y to 2K, developing rollers 3Y to 3K, mixers 4Y to 4K, an intermediate transfer belt 6, a fixing device 7, and a discharge tray 8.

The image forming apparatus 1 according to this embodiment includes a controller 801, an ASIC circuit 802, a memory 803, an operation display unit 805, and a communication unit 807.

The controller 801 has a function of performing various processes in the image forming apparatus 1, as well as a function of executing programs stored in the memory 803 to realize various functions. The memory 803 may be, for example, RAM (Random Access memory), ROM (Read Only Memory), DRAM (Dynamic RandomAccess memory), SRAM (Static Random Access Memory), or VRAM (Video RAM), and has a function of storing various information and programs used in the image forming apparatus 1.

The memory 803 may store a monitoring screen or a WEB page that displays a warning screen, which will be described later.

The controller 801 switches the security mode of the image forming apparatus 1 between a first state and a second state. The first state represents a high-security mode that allows printing of only the print jobs provided with verification information among print jobs received through the communication unit 807. The second state represents a low-security mode that allows printing of print jobs received through the communication unit 807 irrespective of presence or absence of the verification information.

The operation display unit 805 displays various settings. The operation display unit 805 may be LCD (Liquid Crystal Display), EL (Electronic Luminescence), PDP (Plasma Display Panel), or CRT (Cathode Ray Tube).

Various settings are changed through operation of the operation display unit 805. The operation display unit 805 may be of a touch panel type.

The outline of a copying process will be described below as one example of a process in the image forming apparatus according to this embodiment.

First, a sheet picked up from a cassette by the pick-up rollers 51 to 54 is fed into a sheet transfer path. The sheet fed into the sheet transfer path is transferred toward a predetermined transfer direction by a plurality of pairs of rollers.

Meanwhile, images of a plurality of sheets of the original that are automatically transferred in a continuous manner by the automatic original transfer device 9 are read by the scanning optical system 10 at the predetermined image reading position.

Next, an electrostatic latent image is formed on a photosensitive surface of each of the photosensitive members 2Y, 2M, 2C, and 2K so as to transfer developer images of yellow (Y), magenta (M), cyan (C), and black (K) onto the sheet on the basis of the print data of the image read from the original at the image reading section R.

Successively, the developers stirred by the mixers 4Y to 4K in developer units are fed by developing rollers 3Y to 3K to the respective photosensitive members 2Y to 2K on which the electrostatic latent image was formed as described above. Thereby, the electrostatic latent images formed on the photosensitive surfaces of the photosensitive members are made visible.

The developer image thus formed on the photosensitive members is transferred onto the belt surface of the intermediate transfer belt 6 (so-called primary transfer), and the developer image transferred by rotation of the intermediate transfer belt is transferred onto the sheet being transferred at a predetermined secondary transfer position T.

The developer image transferred onto the sheet is heat-fixed to the sheet by the fixing device 7. The sheet on which the developer image was heat-fixed is transferred into the transfer path by a plurality of pairs of transfer rollers and sequentially discharged onto the discharge tray 8.

FIG. 2 is a diagram showing the configuration of a network printing system. The network printing system of this embodiment includes client PCs 201 and 202, a monitoring PC 301, and the image forming apparatus 1 that also functions as a server.

These client PCs 201 and 202, the monitoring PC 301, and the image forming apparatus 1 are connected to each other through a network. The network may be a LAN (Local Area Network), or a WAN (Wide Area Network).

The image forming apparatus 1 receives print jobs the client PCs 201 and 202 transmit thereto via the network.

The client PCs 201 and 202 operate as terminal devices that transmit print jobs to the image forming apparatus 1. The client PC 201 includes a printer driver that generates print jobs provided with verification information. The client PC 202 includes a printer driver that generates only print jobs not provided with verification information.

The monitoring PC 301 includes a controller 301A. The monitoring PC 301 is operated to switch the security level of the image forming apparatus 1 between the first state and the second state. If the image forming apparatus 1 is used within a corporation, an administrator who is in charge of IT management inside the corporation may have the authority to use the monitoring PC 301.

The print jobs provided with verification information generated at the client PC 201 are transmitted to the image forming apparatus 1 via the network.

The print jobs not provided with verification information generated at the client PC 202 are transmitted to the image forming apparatus 1 via the network.

The image forming apparatus 1, if the received print job is a print job provided with verification information, executes the print job immediately after verification.

The image forming apparatus 1, if the received print job is a print job that is not provided with verification information, transmits an alerting signal indicating that the apparatus received a print job not provided with verification information to the monitoring PC 301 via the network.

The monitoring PC 301 transmits a signal to the image forming apparatus 1 via the network regarding whether or not to permit printing of the print job not provided with verification information.

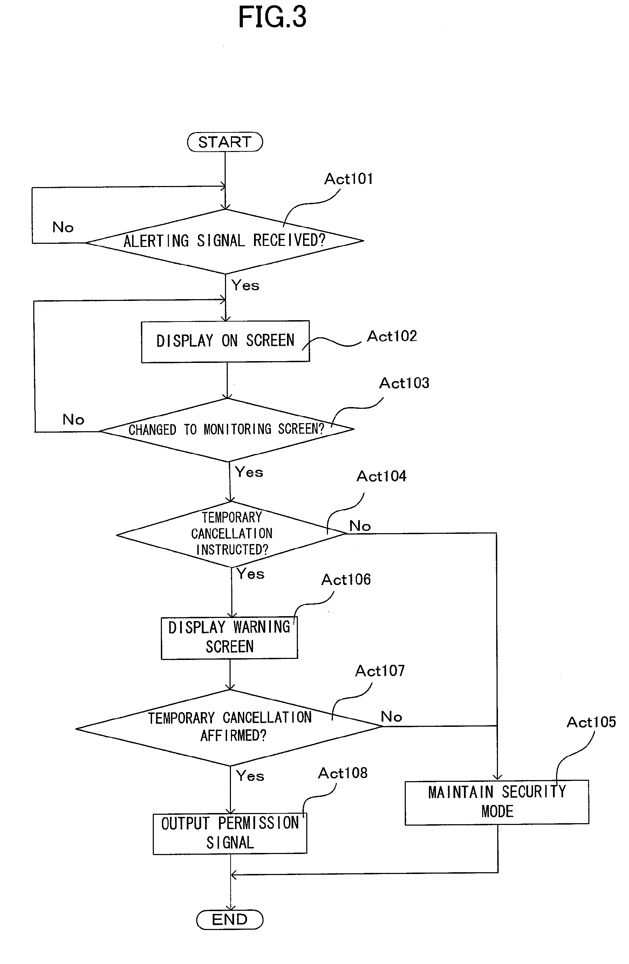

FIG. 3 is a flowchart showing the actions of the monitoring PC 301 that received an alerting signal.

In Act 101, the controller 301A determines whether or not the controller 301A received an alerting signal indicating reception of a print job not provided with verification information.

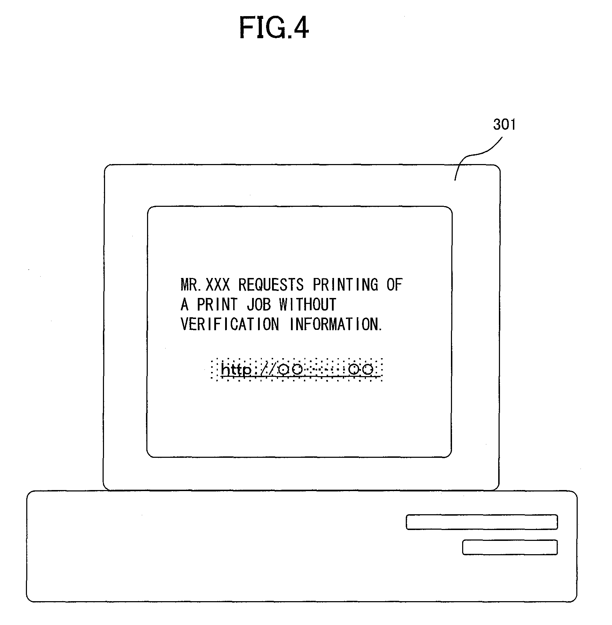

In Act 102, if the controller 301A received an alerting signal, the controller 301A displays a message to that effect on the screen of the monitoring PC 301. FIG. 4 is a schematic diagram schematically showing the screen of the monitoring PC 301. The monitoring PC 301 displays identification information of a person who generated the print job not provided with verification information and a URL to change to a monitoring screen. The administrator of the monitoring PC 301 decides whether or not to permit printing on the basis of the identification information.

In Act 103, the controller 301A determines whether or not the screen of the monitoring PC 301 changed to the monitoring screen stored in the memory 803 of the image forming apparatus 1. When the URL displayed on the screen of the monitoring PC 301 shown in FIG. 4 is selected, the controller 301A obtains a WEB page that displays the monitoring screen stored in the memory 803 of the image forming apparatus 1 via the network, and displays the WEB page on the monitoring PC 301.

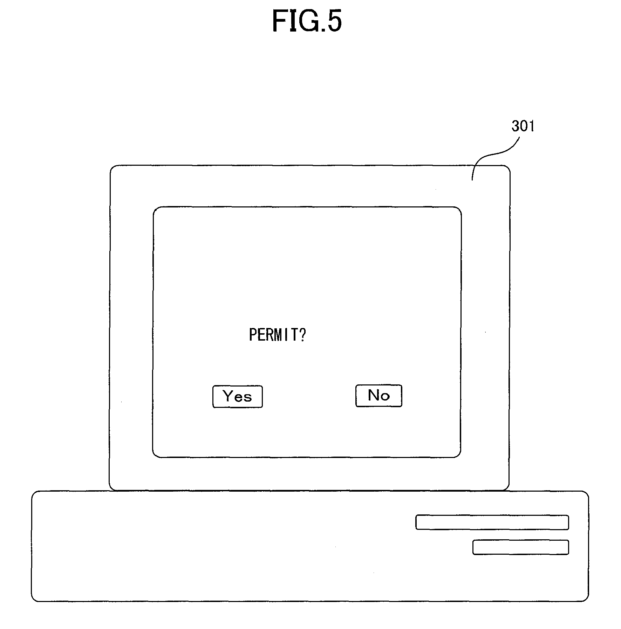

In Act 104, the controller 301A determines whether or not there was a first instruction for temporary cancellation, i.e., an instruction to switch the security level to the second state. FIG. 5 is a schematic diagram schematically showing the monitoring screen. Selecting "Yes" displayed on the monitoring screen instructs first temporary cancellation. Selecting "No" displayed on the monitoring screen means the temporary cancellation is not permitted.

If "No" is selected on the monitoring screen, the process goes to Act 105, wherein the security mode is maintained in the first state.

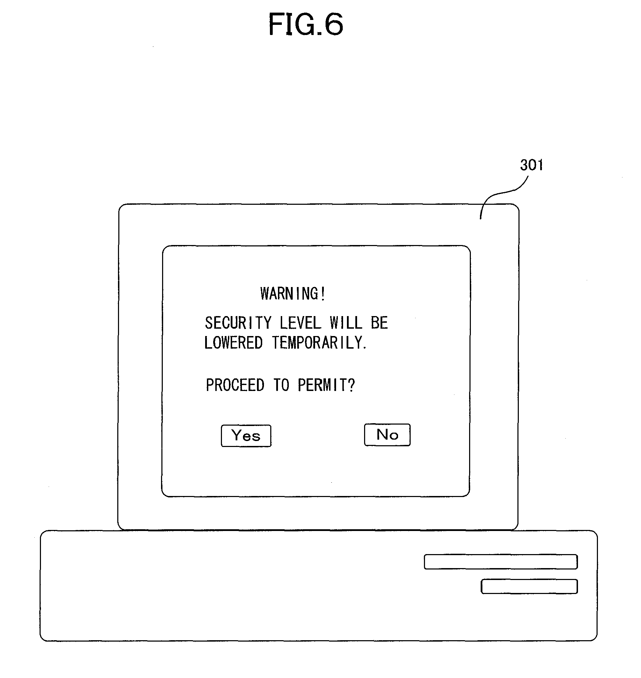

If "Yes" is selected on the monitoring screen, the process goes to Act 106, wherein the controller 301A obtains a WEB page that displays the warning screen stored in the memory 803 of the image forming apparatus 1 via the network, and displays the WEB page on the monitoring PC 301. FIG. 6 is a schematic diagram schematically showing the warning screen.

In Act 107, the controller 301A determines whether or not temporary cancellation was instructed for a second time. Selecting "Yes" displayed on the warning screen instructs second temporary cancellation. Selecting "No" displayed on the warning screen means the temporary cancellation is not permitted.

In Act 108, the controller 301A transmits a permission signal permitting the temporary cancellation to the image forming apparatus 1 via the network.

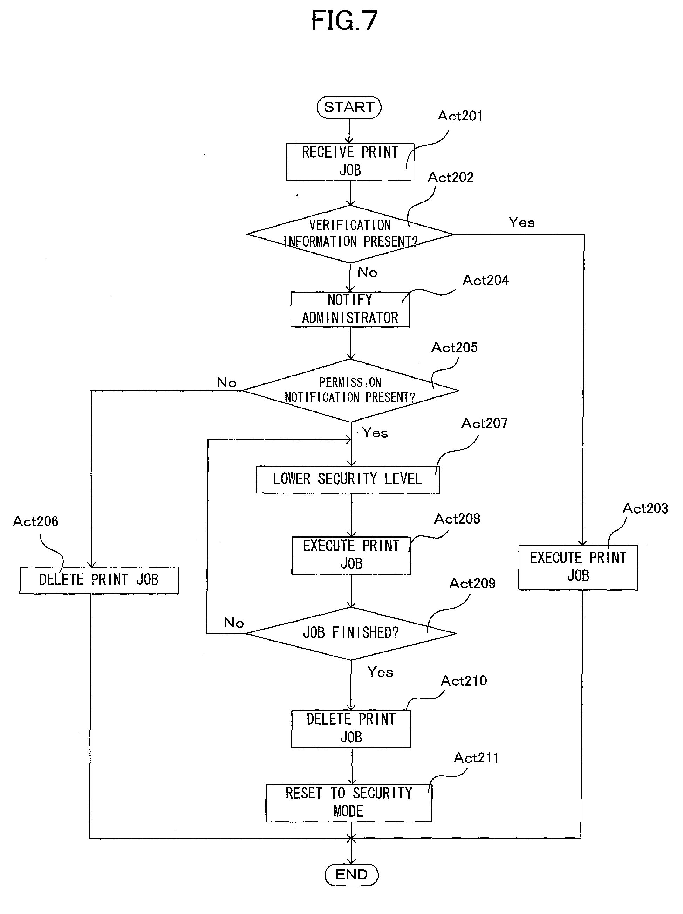

FIG. 7 is a flowchart showing a printing method by the image forming apparatus of a print job provided with verification information.

In Act 201, when the controller 801 receives a print job via the network, the process goes to Act 202. The controller 801 stores the received print job in the memory 803.

In Act 202, the controller 801 determines whether or not the print job is provided with verification information. If the print job is provided with verification information, the process goes to Act 203. In Act 203, the controller 801 executes the print job after verification.

If the print job is not provided with verification information, the process goes to Act 204, wherein the controller 801 transmits an alerting signal to the monitoring PC 301 via the network.

In Act 205, the controller 801 determines whether or not the controller 801 received a signal permitting printing transmitted from the monitoring PC 301 via the network.

If the controller 801 received the signal permitting printing, the process goes to Act 207. If the controller 801 did not receive the signal permitting printing, that is, if the controller 801 did not receive the signal permitting printing within a predetermined time period, the process goes to Act 206.

In Act 206, the controller 801 deletes the print job from the memory 803 and maintains the security level in the first state.

In Act 207, the controller 801 switches the security level of the image forming apparatus 1 from the first state to the second state. That is, the image forming apparatus 1 is switched to the state with a low security level in which execution of print jobs not provided with verification information is allowed.

In Act 208, the controller 801 instructs the image forming section P to execute the print job.

In Act 209, the controller 801 determines whether or not the print job was finished and maintains the security level of the image forming apparatus 1 in the second state until the print job is finished.

In Act 210, the controller 801 erases the executed print job from the memory 803.

In Act 211, the controller 801 resets the security level of the image forming apparatus 1 from the second state to the first state.

According to the embodiment above, printing is executed even from a printing application that cannot generate verification information.

The various actions in the process in the image forming apparatus 1 described above are realized by executing a program stored in the memory 803 by the controller 801.

Further, a program that executes various actions described above in a computer forming the image forming apparatus 1 may be provided as an operation program of the image forming apparatus 1.

While this embodiment was illustrated as having the program recorded in advance in a memory region provided inside the apparatus, the embodiment is not limited thereto. A similar program may be downloaded from the network to the apparatus, or a similar program stored on a computer-readable recording medium may be installed onto the apparatus.

The recording medium may be of any form as long as the recording medium can store a program and is computer-readable. More specifically, the recording medium may be, for example, any of internal memory devices mounted inside a computer such as ROM, RAM and the like, portable recording media such as CD-ROM, flexible disk, DVD disk, magneto optical disk, IC card and the like, database holding a computer program, other computers and database thereof, on-line transfer media, and the like.

The function obtained through installation or downloading in advance as described above can be realized in cooperation with an OS (operating system) or the like in the apparatus.

The program may partly or entirely be a dynamically generated execution module.

It goes without saying that the various processes realized by a processor executing the program in the embodiments described above can be at least partly executed by a circuit, i.e., by the ASIC 802.

### (Variation 1)

In Act 209 of the flowchart of FIG. 7, the controller 801 resets the security level from the second state to the first state when the print job is complete. Other methods may be used.

As another method, the controller 801 starts counting with the start of the print job, and switches the security level from the second state to the first state when a predetermined count time elapsed.

As another method, the monitoring PC 301 may transmit a reset signal to the image forming apparatus 1 via the network after the execution of the print job. The controller 801 of the image forming apparatus 1 switches the security level from the second state to the first state when the controller 801 receives the reset signal.

As another method, the controller 801 displays information that prompts resetting of the mode on the operation display unit 805 after completion of the print job. The user operates through a mode resetting screen displayed on the operation display unit 805, whereby a reset signal is output, on the basis of which the controller 801 switches the security level from the second state to the first state.

### (Variation 2)

The controller 801 may set the communication unit 807 in a shut-down state wherein the communication unit 807 cannot receive signals when the security level is lowered to the second state. In the second state, reception of an unauthorized print job without verification information is prohibited, while only print jobs without verification information that were already received are printed. This way convenience for the user and improvement of security level are both achieved.

### (Variation 3)

The embodiments described above may be applied when storing a file scanned by the image forming apparatus 1 in a storage on the network.

The image forming apparatus 1, in the first state in which the security level is high, transmits image data read by the image reading section R to a storage on the network through a first transfer path with a high security level. The transfer method of the first transfer path may be FTPS (File Transfer Protocol over SSL/TLS). FTPS is a protocol that encrypts data transmitted by FTP with SSL or TLS.

The image forming apparatus 1, in the second state in which the security level is low, transmits image data read by the image reading section R to a storage on the network through a second transfer path with a low security level. The transfer method of the second transfer path may be SMB (Server Message Block).

To transmit the image data to the storage on the network through the second transfer path with a low security level, the mode is switched as will be described below.

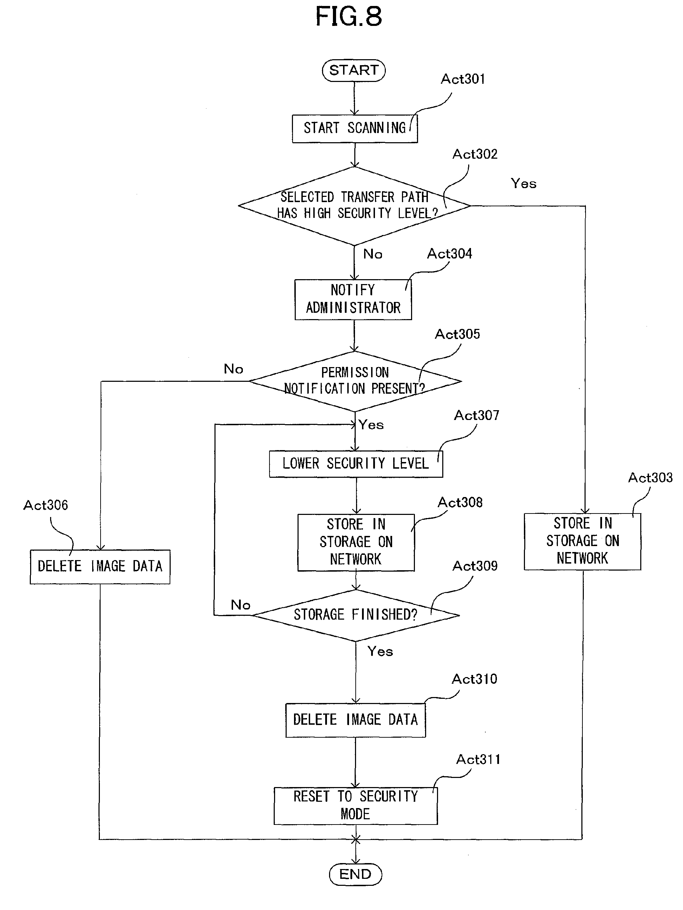

FIG. 8 is a flowchart showing a method of storing image data in a storage. In an initial state, the security level of the image forming apparatus 1 is in the first state.

Referring to FIG. 1, FIG. 2, and FIG. 8, in Act 301, when a user presses a scan button displayed on the operation display unit 805, the controller 801 instructs the image reading section R to start the reading action. The controller 801 stores image data read by the image reading section R in the memory 803.

The user may select a transfer path and a file storage destination for the scanned data through operation of the operation display unit 805. The transfer path includes the first and second transfer paths described above.

The controller 801 stores the scanned image data in the memory 803.

In Act 302, the controller 801 determines which of the first or second transfer path is selected as the transfer path for the scanned data.

If the selected transfer path is the first transfer path, the process goes to Act 303, wherein the controller 801 stores the image data in the storage on the network.

If the selected transfer path is the second transfer path, the process goes to Act 304, wherein the controller 801 transmits an alerting signal to the monitoring PC 301 via the network.

In Act 305, the controller 801 determines whether or not the monitoring PC 301 notified a signal permitting storage through the second transfer path. If the controller 801 received the signal permitting storage, the process goes to Act 307. If the controller 801 did not receive the signal permitting storage, i.e., if the controller 801 did not receive the signal permitting storage within a predetermined time period, the process goes to Act 306.

In Act 306, the controller 801 deletes the image data stored in the memory 803 and maintains the first state with a high security level.

In Act 307, the controller 801 switches the security level of the image forming apparatus 1 from the first state to the second state.

In Act 308, the controller 801 reads out the image data read by the image reading section R from the memory 803 and stores the data in the storage on the network through the second transfer path with a low security level.

In Act 309, the controller 801 determines whether or not the data was stored in the storage, and maintains the security level of the image forming apparatus 1 in the second state until the storage of the data in the storage is complete.

In Act 310, the controller 801 erases the image data stored in the storage on the network from the memory 803.

In Act 311, the controller 801 resets the security level of the image forming apparatus 1 from the second state to the first state when erasion of the image data is complete.

### (Variation 4)

The monitoring function for monitoring the security mode of the image forming apparatus 1 may be provided in an external device of the image forming apparatus 1. This external device may be the monitoring PC 301. The monitoring PC 301 includes an application for changing the security mode of the image forming apparatus 1, and changes the security mode of the image forming apparatus 1 by executing this application. The application software may be installed in the monitoring PC 301 in advance, or downloaded from the Internet.

The present invention may be embodied in various other forms without departing from its spirit or essential characteristics. Therefore the embodiments described above are to be considered in all respects only as illustrative and not restrictive. The scope of the present invention is indicated by the claims and not limited by the description herein. All variations, various improvements, substitutes and alterations which come within the range of equivalency of the claims are to be embraced within the scope of the invention.

## Claims

1. An image forming apparatus, comprising:
a communication unit;
an image forming section configured to form an image on a sheet on the basis of print data the communication unit received; and
a controller configured to switch a security level between a first state and a second state, the first state allowing printing by the image forming section of only first print data provided with verification information among print data the communication unit received, and the second state allowing printing by the image forming section of print data the communication unit received irrespective of presence or absence of verification information, the controller switching the security level from the first state to the second state when, in the first state, the controller receives a permission signal that instructs permission of printing of second print data not provided with verification information, so as to allow printing of the second print data by the image forming section, and switching the security level from the second state to the first state after allowing the printing of the second print data.

2. The apparatus according to claim 1, wherein the communication unit communicates with a monitoring device, and wherein the controller receives the permission signal the monitoring device output through the communication unit.

3. The apparatus according to claim 1, comprising an operation unit for operating the apparatus, and wherein the controller receives the permission signal output from the operation unit.

4. The apparatus according to claim 3, wherein the operation unit serves also as a display unit.

5. The apparatus according to claim 1, wherein the controller switches the security level from the first state to the second state, and after a predetermined time lapsed, the controller switches the security level from the second state to the first state.

6. The apparatus according to claim 1, comprising a storage unit for storing print data the communication unit received, and wherein
the controller deletes the second print data from the storage unit after allowing the printing of the second print data.

7. The apparatus according to claim 1, wherein the controller prohibits signal reception of the communication unit when the security level is in the second state.

8. A monitoring system for an image forming apparatus, comprising:
an image forming apparatus including:
a communication unit;
an image forming section configured to form an image on a sheet on the basis of print data the communication unit received; and
a controller configured to switch a security level between a first state and a second state, the first state allowing printing by the image forming section of only first print data provided with verification information among print data the communication unit received, and the second state allowing printing by the image forming section of print data the communication unit received irrespective of presence or absence of verification information, the controller switching the security level from the first state to the second state when, in the first state, the controller receives a permission signal that instructs permission of printing of second print data not provided with verification information, so as to allow printing of the second print data by the image forming section, and switching the security level from the second state to the first state after allowing the printing of the second print data; and
a monitoring device that transmits the permission signal to the communication unit.

9. The system according to claim 8, wherein the controller outputs an alerting signal to the monitoring device through the communication unit when the controller receives the second print data.

10. The system according to claim 9, wherein the monitoring device includes a monitoring controller and a display unit, and wherein
the monitoring controller displays warning information on the display unit, on the basis of the alerting signal, indicating that the image forming apparatus received the second print data.

11. The system according to claim 10, wherein the warning information includes an address for accessing a WEB screen for controlling the controller of the image forming apparatus.

12. The system according to claim 11, wherein the image forming apparatus includes a storage unit for storing the WEB screen.

13. The system according to claim 9, comprising a first terminal and a second terminal connected to the image forming apparatus via a network,
the first terminal including a printing application that generates the first print data, and
the second terminal including a printing application that generates the second print data.

14. An operation program for an image forming apparatus that includes a function for switching a security level between a first state and a second state, wherein in the first state only first print data provided with verification information is printed, and in the second state print data is printed irrespective of presence or absence of verification information, the operation program causing a computer to execute a process for switching the security level from the first state to the second state when, in the first state, a permission signal that instructs permission of printing of second print data not provided with verification information is input.

15. The program according to claim 14, wherein the image forming apparatus includes a communication unit that communicates with a monitoring device, and receives the permission signal the monitoring device output through the communication unit.

16. The program according to claim 14, wherein the image forming apparatus includes an operation unit for operating the image forming apparatus, and wherein the operation unit outputs the permission signal in accordance with an operation by a user.

17. The program according to claim 16, wherein the operation unit serves also as a display unit.

18. The program according to claim 14, wherein the security level is switched from the first state to the second state, and after a predetermined time lapsed, the security level is switched from the second state to the first state.

19. The program according to claim 14, wherein the image forming apparatus includes a storage unit for storing received print data, and wherein
the program deletes the second print data from the storage unit after allowing the printing of the second print data.

20. The program according to claim 14, wherein the program prohibits reception of new print data by the image forming apparatus when the security level is in the second state.
